# EUROPÄISCHE PATENTSCHRIFT

(11) **EP 1 713 615 B1**
(45) Veröffentlichungstag und Bekanntmachung des Hinweises auf die Patenterteilung: **10.12.2008**
(21) Anmeldenummer: 05706950.2
(22) Anmeldetag: 21.01.2005
(51) Int. Cl.: B23Q 1/60, B23Q 17/22, B23Q 11/00, B23Q 39/04

(54) **WERKZEUGMASCHINE MIT ZWEI TEILSCHLITTEN ZUR KORREKTUR ODER KOMPENSATION VON UNTERSCHIEDLICHEN WERKZEUGLÄNGEN**
MACHINE TOOL WITH TWO SUBSLIDES FOR CORRECTING OR COMPENSATING FOR DIFFERENT TOOL LENGTHS
MACHINE-OUTIL AVEC DEUX SOUS-CHARIOTS POUR CORRIGER OU COMPENSER DES DIFFERENCES DE LONGUEUR D'OUTIL

(30) Priorität: 13.02.2004 DE 102004008457
(43) Veröffentlichungstag der Anmeldung: 25.10.2006
(73) Patentinhaber: Ex-Cell-O GmbH, 73054 Eislingen/Fils (DE)
(72) Erfinder: HORN, Wolfgang, 73035 Göppingen (DE); BÖHLER, Harald, 70771 Echterdingen (DE); POMPE, Walter, 73333 Gingen (DE); WINCKLER, Friedrich, 73527 Schwäbisch Gmünd (DE)
(74) Vertreter: Hoeger, Stellrecht & Partner Patentanwälte
(86) Internationale Anmeldenummer: PCT/EP2005/000579
(87) Internationale Veröffentlichungsnummer: WO 2005/077593

(56) Entgegenhaltungen:
- EP-A- 0 412 635
- WO-A-20/05000507
- DE-C1- 19 652 460
- US-A- 4 159 660
- US-A- 4 197 769
- US-A- 5 105 694

## Beschreibung

Die Erfindung betrifft eine Werkzeugmaschine mit mindestens einem beweglichen Schlitten, welcher eine Mehrzahl von Haltern für Werkzeuge und/oder Werkstücke aufweist.

Bei einer Mehrspindel-Werkzeugmaschine lassen sich gleichzeitig eine Mehrzahl von Werkstücken (entsprechend der Anzahl der Werkzeugspindeln) bearbeiten. Es ergeben sich dadurch kürzere Bearbeitungszeiten bezogen auf die Anzahl von Werkstücken.

Aus der EP 0 412 635 A2 ist eine Werkzeugmaschine bekannt, welche einen ersten Schlitten und einen zweiten Schlitten umfaßt. Diese Werkzeugmaschine weist einen, Antrieb mit einer Spindel auf, die direkt mit dem ersten Schlitten gekoppelt ist, so daß dieser entlang der Spindelachse verfahrbar ist. Die genannte Spindel treibt auch den zweiten Schlitten an, jedoch unter Zwischenschaltung zusätzlicher Antriebsmittel, mit denen die Lage des zweiten Schlittens relativ zu dem ersten Schlitten entlang der Spindelachse steuerbar ist. Der erste Schlitten und der zweite Schlitten sind unabhängig voneinander und miteinander nicht verbunden.

Die US 5,105,694 offenbart eine Werkzeugmaschine nach dem Oberbegriff des Anspruchs 1 mit einer Kreuzschlittenanordnung, welche eine erste Schlitteneinheit und eine zweite Schlitteneinheit umfasst. Die zweite Schlitteneinheit ist durch die erste Schlitteneinheit angetrieben, wobei beide Schlitten auf einer identischen Bahn einander folgen.

Der Erfindung liegt die Aufgabe zugrunde, eine Werkzeugmaschine der eingangs genannten Art, bei der der mindestens eine Schlitten eine Mehrzahl von getrennten Teilschlitten aufweist, an jedem Teilschlitten mindestens ein Halter angeordnet ist, die relative Lage der Teilschlitten zueinander feststellbar einstellbar ist und benachbarte Teilschlitten über eine Feststelleinrichtung miteinander fixierbar sind, so zu verbessern, daß die Stabilität des Schlittens trotz Auftrennung in Teilschlitten gewährleistet ist.

Diese Aufgabe wird erfindungsgemäß durch eine Werkzeugmaschine nach Anspruch 1 gelöst.

Bei der erfindungsgemäßen Werkzeugmaschine erfolgt die Bewegung des mindestens einen Schlittens während Prozeßvorgängen als Teilschlitten-Verbund. Für einen solchen Schlitten muß dann, wenn dieser linear beweglich ist, im NC-Programm. nur eine einzige Achse angesprochen werden. Der Schlitten mit der Mehrzahl von Werkstücken bzw. mit der Mehrzahl von Werkzeugen läßt sich also als Ganzes in seiner Beweglichkeit steuern. Wenn getrennte Schlitten vorgesehen wären, dann müßte deren Bewegung getrennt gesteuert werden. Es lassen sich dadurch wiederum eine Mehrzahl von Werkstücken synchron bearbeiten. Der Programmieraufwand bzw. Anpassungsaufwand ist durch die "geklemmte" NC-Achse gering gehalten.

Da der Schlitten in Teilschlitten aufgetrennt ist, deren relative Lage zueinander feststellbar einstellbar ist, läßt sich eine Kompensation bezüglich relativen Lagenunterschieden zwischen den beiden Teilschlitten und insbesondere bezüglich Werkstücken und/oder Werkzeugen erreichen. Insbesondere läßt sich eine Korrektur der gesamten Vorrichtung, das heißt eine Justage durchführen. Weiterhin läßt sich die Montage der Werkzeugmaschine vereinfachen, da über die Einstellbarkeit der Teilschlitten eine Ausrichtung beispielsweise zwischen Werkzeugspindeln und Werkstückhaltern möglich ist. Es ist auch eine Werkzeuglängenkorrektur durchführbar, wenn die relative Lage der Teilschlitten entsprechend der Werkzeuglängenunterschiede eingestellt wird.

Dadurch, daß benachbarte Teilschlitten über eine Feststelleinrichtung wie beispielsweise Klemmeinrichtung miteinander fixierbar sind, läßt sich eine Einstellbarkeit der relativen Lage auf einfache Weise realisieren. Insbesondere ist eine stufenlose Einstellbarkeit ermöglicht. Da die Hubhöhe für die Einstellung der relativen Lage sehr klein sein kann (beispielsweise kleiner als 1 mm), kann dann auch eine kleine relative Lagenverschiebung fixiert werden.

An jedem Teilschlitten ist mindestens ein Halter angeordnet. Dadurch läßt sich die relative Lage von Haltern in der Werkzeugmaschine einstellen. Handelt es sich beispielsweise bei den Haltern um Werkzeugspindeln, dann läßt sich die relative Lage von Werkzeugspindeln einstellen. Dadurch ist zum einen eine Montage der Werkzeugmaschine vereinfacht, da sich auf einfache Weise eine Ausrichtung durchführen läßt. Es lassen sich auch Werkzeuglängenkorrekturen durchführen oder Justierungsvorgänge durchführen.

Ganz besonders vorteilhaft ist es, wenn die Bewegung des mindestens einen Schlittens bei der Werkstückbearbeitung als Teilschlitten-Verbund erfolgt. Es muß dann keine getrennte Antriebssteuerung für die Teilschlitten vorgesehen werden, sondern nur die Kombination der Teilschlitten (der Teilschlitten-Verbund) mit starr fixierter Lage der Teilschlitten relativ zueinander wird gesteuert bewegt.

Günstigerweise ist pro Teilschlitten genau ein Halter angeordnet, so daß sich eben eine Korrektur bzw. Kompensation für jeden Halter getrennt durchführen läßt.

Die relative Lage von Teilschlitten läßt sich auf einfache Weise einstellen, wenn die relative Lage benachbarter Teilschlitten einstellbar ist. Ein Teilschlitten muß dann entsprechende Verbindungselemente aufweisen, über die er mit einem benachbarten Teilschlitten fixierbar ist. Solche Verbindungselemente lassen sich beispielsweise in der Art von Laschen auf einfache Weise ausbilden. Eine Fixierung wiederum läßt sich auf einfache Weise beispielsweise über Klemmung und/oder Formschlußverbindungen erreichen.

Eine Einstellbarkeit der relativen Lage ist auf einfache Weise erreicht durch eine Einstellbarkeit in einer Richtung im wesentlichen parallel zur Bewegungsrichtung des Schlittens. Es muß dann nur für eine Beweglichkeit in einer Richtung gesorgt werden. Die Führung des Schlittens auf Führungsbahnen wird durch die Einstellbarkeit nicht gestört bzw. verhindert, da eben die Einstellbarkeit in Führungsrichtung ausgebildet ist.

Der mindestens eine Schlitten ist auf Führungsbahnen geführt.

Es sind beabstandete äußere Führungsbahnen vorgesehen, um den mindestens einen Schlitten zu stützen und zu führen.

Es ist mindestens eine zusätzliche Führungsbahn vorgesehen, um den mindestens einen Schlitten an oder in der Nähe eines Verbindungsbereichs zweier Teilschlitten zu stützen. Hierdurch läßt sich die Stabilität des Schlittens trotz Auftrennung in Teilschlitten gewährleisten.

Insbesondere weist bei benachbarten Teüschlitten ein erster Teilschlitten Verbindungselemente und ein zweiter Teilschlitten angepaßte Verbindungselemente auf, welche miteinander fixierbar sind. Dadurch läßt sich auf einfache Weise ein Teilschlitten-Verbund herstellen, wobei der TellschliGen-Verbund als Ganzes gesteuert bewegt wird.

Insbesondere ist ein Antrieb für den mindestens einen Schlitten vorgesehen. Erfindungsgemäß müssen keine getrennten Antriebe für die Tellschlitten vorgesehen werden.

Beispielsweise hält der mindestens eine Schlitten eine Mehrzahl von Werkzeugspindeln.

Es kann auch vorgesehen sein, daß der mindestens eine Schlitten eine Mehrzahl von Werkstückhaltern (Werkstücktischen) hält.

Bei einer Ausführungsform der erfindungsgemäßen Werkzeugmaschine ist eine Mehrzahl von Schlitten vorgesehen, wobei die Schlitten in unterschiedlichen Richtungen beweglich sind. Dadurch läßt sich eine optimale Justierung der Werkzeugmaschine durchführen, da eine Einstellbarkeit in mehrere Richtungen ermöglicht ist. Weiterhin läßt sich eine vereinfachte Montage erreichen, da eine Ausrichtung in mehreren Richtungen möglich ist.

Beispielsweise ist ein erster Schlitten vorgesehen, welcher in einer ersten Richtung (Z-Richtung) beweglich ist. Dieser erste Schlitten hält beispielsweise eine Mehrzahl von Werkstücken über Werkstückhalter (Werkstücktische). Über einen solchen Schlitten läßt sich beispielsweise eine Werkzeuglängenkorrektur durchführen, indem die relative Lage der Teilschlitten in der ersten Richtung eingestellt wird.

Für einen Antrieb des ersten Schlittens sind vorzugsweise zwei beabstandete Motoren und insbesondere zwei beabstandete Linearmotoren (Linearmotoren-Paar) vorgesehen.

Es kann ein zweiter Schlitten vorgesehen sein, welcher in einer zweiten Richtung (X-Richtung) beweglich ist. Dadurch ist dann auch eine Einstellbarkeit insbesondere für die Montage und die Justage in der X-Richtung ermöglicht.

Insbesondere sind zum Antrieb des zweiten Schlittens zwei Motorenpaare und insbesondere zwei Linearmotorenpaare vorgesehen. Die Linearmotoren in einem Paar sind vorzugsweise symmetrisch angeordnet.

Es kann ein dritter Schlitten vorgesehen sein, welcher in einer dritten Richtung (Y-Richtung) beweglich ist. Durch einen solchen dritten Schlitten läßt sich eine Kompensation auch in der Y-Richtung durchführen.

Beispielsweise umfaßt der Antrieb des dritten Schlittens zwei beabstandete Motoren und insbesondere ein Linearmotoren-Paar.

Es kann vorgesehen sein, daß ein erster Schlitten einen zweiten Schlitten hält und der zweite Schlitten einen dritten Schlitten hält. Der erste Schlitten ist beispielsweise gegenüber einem Maschinengestell verfahrbar. Der zweite Schlitten ist dann an dem ersten Schlitten verfahrbar und der dritte Schlitten ist an dem zweiten Schlitten verfahrbar. Beispielsweise hält der dritte Schlitten eine oder mehrere Werkzeugspindeln. Über den dritten Schlitten läßt sich dann beispielsweise eine Beweglichkeit in einer Z-Richtung der Werkzeugspindeln realisieren. Über den zweiten Schlitten läßt sich eine Beweglichkeit in einer Y-Richtung realisieren und über ersten Schlitten läßt sich eine Beweglichkeit in einer X-Richtung realisieren.

Insbesondere ist dann mittels eines Schlittenverbunds aus dem ersten Schlitten, dem zweiten Schlitten und dem dritten Schlitten mindestens ein Werkzeug und/oder Werkstück in allen drei Raumrichtungen beweglich.

Ganz besonders vorteilhaft es ist, wenn die Schlitten in allen linearen Bewegungsachsen der Werkzeugmaschine entkoppelt sind. Es läßt sich dann auch eine Einstellung bzw. Justage in allen Bewegungsachsen durchführen.

Die nachfolgende Beschreibung einer bevorzugten Ausführungsform dient im Zusammenhang mit der Zeichnung der näheren Erläuterung der Erfindung. Es zeigen:
- Figur 1: eine schematische (Teil-)Seitenansicht eines Ausführungsbeispiels einer erfindungsgemäßen Werkzeugmaschine;
- Figur 2: eine Vorderansicht der Werkzeugmaschine gemäß Figur 1 in der Richtung A;
- Figur 3: eine Draufsicht auf die Werkzeugmaschine gemäß Figur 1 in der Richtung B;
- Figur 4(a): eine vergrößerte Darstellung des Bereichs G₁ gemäß Figur 3;
- Figur 4(b): eine Seitenansicht des Bereichs G₁ in der Richtung C gemäß Figur 4(a);
- Figur 5(a): eine vergrößerte Darstellung des Bereichs G₂ gemäß Figur 3;
- Figur 5(b): eine Seitenansicht des Bereichs G₂ in der Richtung D gemäß Figur 5(a); und
- Figur 6: eine Teil-Schnittdarstellung längs der Linie 6-6 gemäß Figur 2.

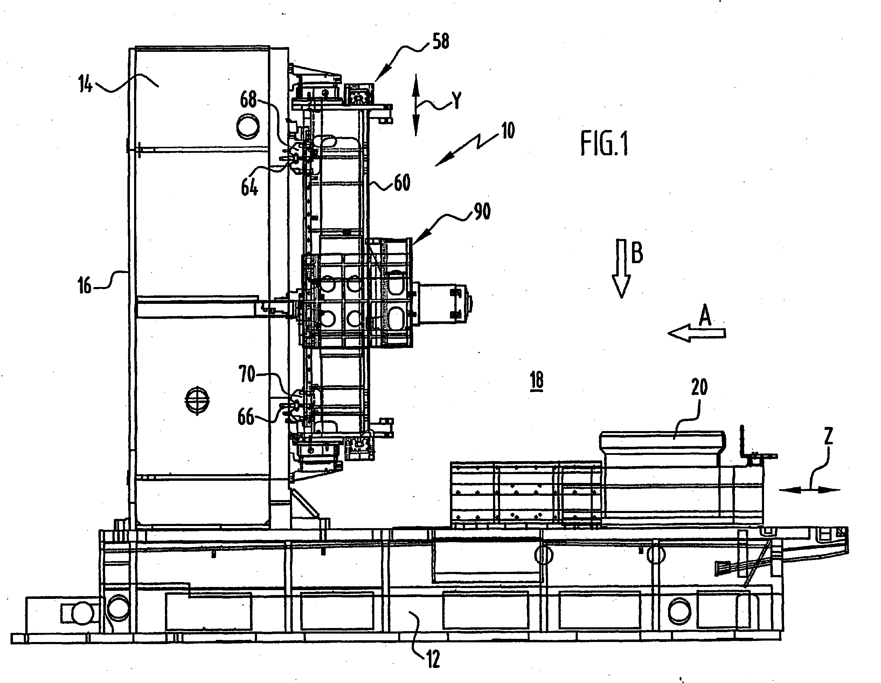

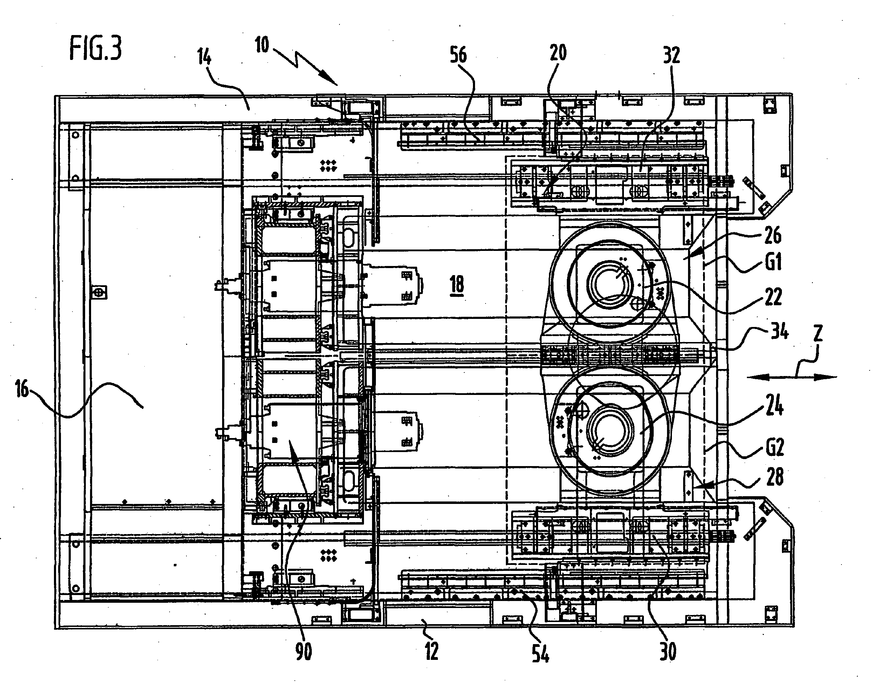

Ein Ausführungsbeispiel einer erfindungsgemäßen Werkzeugmaschine, welche in der Figuren 1 bis 3 gezeigt und dort als Ganzes mit 10 bezeichnet ist, um-faßt ein Maschinenbett 12, mittels welchem die Werkzeugmaschine 10 auf einer Unterlage aufgestellt ist. Über das Maschinenbett 12 erhebt sich ein Maschinengestell 14, welches beispielsweise portalförmig oder jochförmig ausgebildet ist mit einer Mittelöffnung 16. Über diese Mittelöffnung 16 sind beispielsweise Versorgungsleitungen für Werkzeugspindeln geführt. Steuerungseinrichtungen und Schaltschränke, von denen diese Energieversorgungsleitungen ausgehen, schließen sich an einer einem Arbeitsraum 18 abgewandten Seite an das Maschinengestell 14 an (in der Zeichnung nicht gezeigt).

An dem Maschinenbett 12 ist ein erster Schlitten 20 (Z-Schlitten) in einer ersten Richtung (Z-Richtung) linearverschieblich geführt. Die Verschiebungsrichtung Z ist insbesondere im wesentlichen eine horizontale Richtung. Der erste Schlitten 20 weist eine Mehrzahl von Werkstückhaltern beispielsweise in der Form von Werkstücktischen auf. Bei dem in den Figuren gezeigten Ausführungsbeispiel weist der erste Schlitten 20 einen ersten Werkstückhalter 22 und einen zweiten Werkstückhalter 24 auf. Bei dieser Ausführungsform ist die Werkzeugmaschine 10 als Doppelspindel-Werkzeugmaschine ausgebildet.

In die Werkstückhalter 22, 24 lassen sich jeweilige Werkstücke einspannen, wobei dann zwei Werkstücke gleichzeitig bearbeitbar sind. Grundsätzlich ist es möglich, daß der erste Schlitten auch mehr als zwei Werkstückhalter aufweist.

Es kann vorgesehen sein, daß die Werkstückhalter 22, 24 um eine Achse quer zur Z-Richtung drehbar sind. Die Drehachse ist vorzugsweise eine vertikale Achse.

Der erste Schlitten 20 ist mittels eines ersten Teilschlittens 26 und eines zweiten Teilschlittens 28 gebildet. Der erste Schlitten 20 ist ein Teilschlitten-Verbund. Die Bewegung des ersten Schlittens 20 wird als Ganzes gesteuert, das heißt es wird die Bewegung des Tellschlitten-Verbunds gesteuert und nicht die Bewegung der einzelnen Teilschlitten 26, 28.

Der erste Werkstückhalter 22 ist an dem ersten Teilschlitten 26 angeordnet und der zweite Werkstückhalter. 24 ist an dem zweiten Teilschlitten 28 angeordnet. Die relative Position der beiden Teilschlitten 26 und 28 zueinander ist in der Richtung Z einstellbar. Dadurch ist auch die relative Position der beiden Werkstückhalter 22, 24 in der Richtung Z einstellbar. Die relative Position der beiden Tellschlitten 26 und 28 zueinander ist wiederum festlegbar.

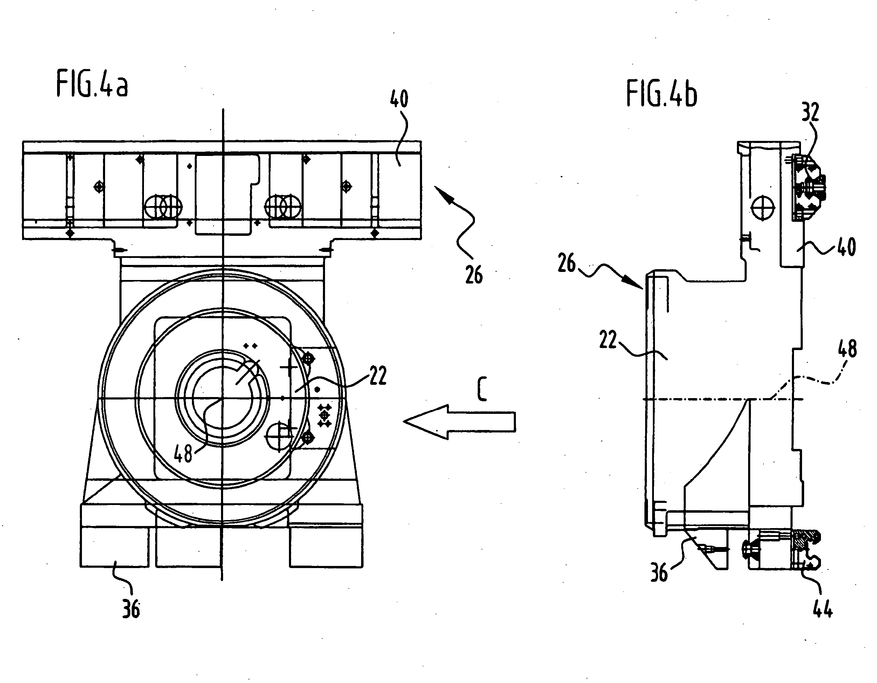

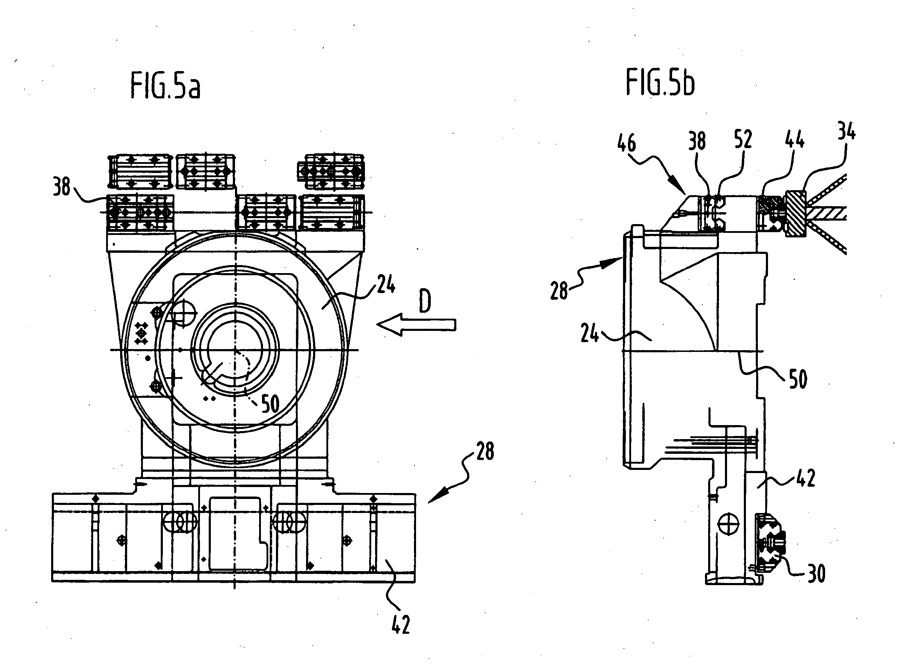

Dazu ist eben der erste Schlitten in die beiden Tellschlitten 26, 28 aufgetrennt (Figuren 4 und 5).

An dem Maschinenbett 12 ist eine erste äußere Führungsbahn 30 und eine zweite äußere Führungsbahn 32 für den ersten Schlitten 20 angeordnet. Diese Führungsbahnen 30, 32, welche insbesondere über Führungsleisten gebildet sind, erstrecken sich in der Z-Richtung. Der erste Schlitten 20 weist im Bereich seines seitlichen Endes entsprechende Führungsschuhe 40, 42 auf, mit welchen der erste Schlitten 20 auf den Führungsbahnen 30, 32 aufsitzt und über welche eben der Schlitten 20 auf den Führungsbahnen 30, 32 geführt ist.

Es ist eine weitere Führungsbahn 34 vorgesehen, welche zwischen den beiden äußeren Führungsbahnen 30, 32 angeordnet ist und insbesondere mittig angeordnet ist. Diese ist wiederum vorzugsweise über eine Führungsleiste gebildet und erstreckt sich in Z-Richtung. In der Nähe dieser dritten Führungsbahn 34 ist der erste Schlitten 20 aufgetrennt, das heißt ein Ende des ersten Teilschlittens 26 und ein benachbartes Ende des Teitschlittens 28 liegt im Bereich dieser Führungsbahn 34. Dadurch läßt sich der erste Schlitten 20 in einem Verbindungsbereich der beiden Teilschlitten 26, 28 über die Führungsbahn 34 abstützen.

Der erste Teilschlitten 26 weist dem zweiten Teilschlitten 28 zugewandt Verbindungselemente 36 auf, welche beispielsweise mittels Laschen gebildet sind. Der zweite Teilschlitten 28 weist dem ersten Teilschlitten 26 angepaßte Verbindungselemente 38 auf, wobei die Verbindungselemente 36 und 38 aneinander angepaßt sind. Die Verbindungselemente 36 und 38 lassen sich insbesondere klemmend miteinander verbinden, um eben die beiden Teilschlitten 26, 28 zu dem Teilschlitten-Verbund 20 zu verbinden.

Beispielsweise weist der erste Teilschlitten 26 ein oder mehrere linear ausgerichtete Führungsschuhe 40 für die Führungsbahn 32 auf. Der erste Teilschlitten 26 weist ferner ein oder mehrere linear ausgerichtete Führungsschuhe 44 zum Aufsetzen auf die dritte Führungsbahn 34 auf. Die Verbindungselemente 36 des ersten Teilschlittens 26 sind bevorzugterweise in einer Höhenrichtung quer zur Z-Richtung oberhalb des oder der Führungsschuhe 44 angeordnet. Die Verbindungselemente 38 des zweiten Teilschlittens 26 sitzen bezogen auf die Führungsbahn 34 auf einer anderen Höhe, so daß eine Verbindung ermöglicht ist, bei welcher zugeordnete Verbindungselemente 36, 38 übereinander liegen und dabei oberhalb des oder der Führungsschuhe 44 liegen (vgl. Figur 5(b)). Die Verbindung läßt sich über eine Feststelleinrichtung beispielsweise über eine Klemmeinrichtung 46 erreichen, bei der zugeordnete Verbindungselemente 36, 38 miteinander verklemmt werden.

Bei nicht fixierten Teilschlitten 26, 28 ist deren relative Position in der Z-Richtung einstellbar. Die Teilschlitten können in der Z-Richtung relativ zueinander verrückt werden. Dadurch läßt sich der relative Abstand zwischen einer zentralen Achse 48 des Werkstückhalters 22 und einer entsprechenden zentralen Achse 50 des zweiten Werkstückhalters 24 in der Z-Richtung einstellen.

Eine typische Größenordnung der Einstellbarkeit liegt dabei im Millimeter-Bereich. Beispielsweise ist bei einem Verfahrweg des ersten Schlittens 20 In einem Längenbereich von 800 mm eine relative Einstellbarkeit der Lage der beiden Teilschlitten 26 und 28 in der Z-Richtung in der Größenordnung von ± 2,5 mm realisiert.

Zur leichteren Einstellbarkeit kann es vorgesehen sein, daß die beiden Teilschlitten 26, 28 mit einer Führung 52 versehen sind, welche dafür sorgt, daß bei einer relativen Einstellung der Position der beiden Teilschlitten 26, 28 in der Z-Richtung nur eine Z-Bewegung erlaubt ist.

Die Z-Richtung bildet eine einzige NC-Achse. Der Schlitten 20 ist als Teilschlitten-Verbund mit relativ zueinander fixierten Teilschlitten 26, 28 durch zwei beabstandeten Motoren 54, 56 angetrieben. Die Motoren 54, 56 liegen im Bereich der Führungsbahnen 30, 32 symmetrisch ausgerichtet. Es handelt sich bei den Motoren 54, 56 insbesondere um ein symmetrisch angeordnetes Linearmotoren-Paar.

Das Maschinengestell 14 bildet einen Schlittenträger für einen zweiten Schlitten 58 (X-Schlitten). Dieser ist in einer zweiten Richtung X verschieblich geführt, wobei die Richtung X senkrecht zur Z-Richtung ist und vorzugsweise eine horizontale Richtung ist. Der zweite Schlitten 58 ist jochförmig ausgebildet mit einer ersten Mittelöffnung 60 und einer zweiten Mittelöffnung 62. Er hält einen unten näher beschriebenen dritten Schlitten (Y-Schlitten), welcher wiederum Werkzeughalter aufweist. Der zweite Schlitten 58 weist also über den dritten Schlitten Werkzeughalter auf.

An dem Maschinengestell 14 ist eine erste Führungsbahn 64 und eine beabstandete zweite Führungsbahn 66 angeordnet. Diese sind beispielsweise in der Form von Führungsleisten ausgebildet. Der zweite Schlitten 58 weist entsprechende Führungsschuhe 68, 70 auf, über welche er auf den Führungsbahnen 64, 66 geführt ist. Die Führungsbahnen 64, 66 sind insbesondere vertikal beabstandet.

Der zweite Schlitten 58 (X-Schlitten) umfaßt einen ersten Teilschlitten 72 und einen zweiten Teilschlitten 74. Die MlGelöfinung 60 ist in dem ersten Teilschlitten 72 gebildet und die zweite Mittelöffnung 62 in dem zweiten Teilschlitten 74. Die beiden Teilschlitten 72, 74 sind jeweils jochartig ausgebildet.

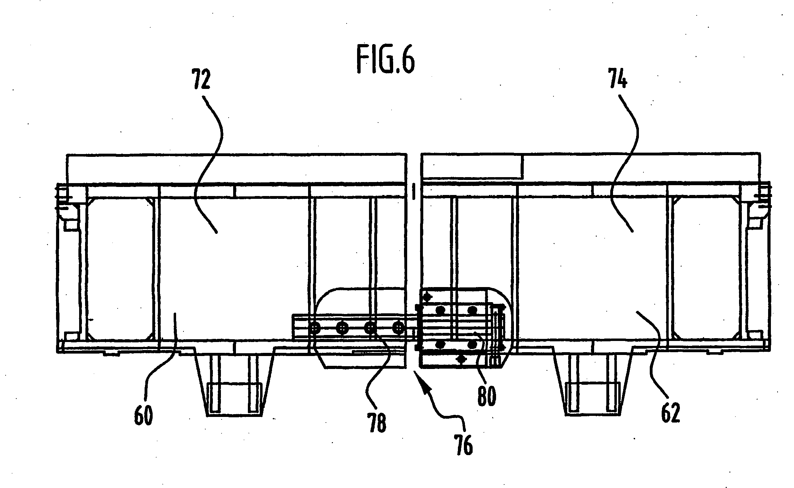

Die relative Position der beiden Teilschlitten 72, 74 ist in der Richtung X einstellbar, wobei die relative Lage beispielsweise über eine Klemmeinrichtung 76 (Figur 6) einstellbar ist. Dadurch ist ein Teilschlitten-Verbund gebildet, welcher als Ganzes beweglich ist, wobei aber eine Einstellbarkeit der relativen Lage der belden Teilschlitten 72, 74 In dem zweiten Schlitten 58 In der Richtung X ermöglicht ist.

Zur Verbindung der beiden Teilschlitten 72, 74 sind angepaßte Verbindungselemente 78, 80 vorgesehen, welche eben über die Klemmeinrichtung 76 miteinander fixierbar sind, um den Teilschlitten-Verbund zu bilden. Beispielsweise weist der Teilschlitten 72 ein schienenförmiges Element als Verbindungselement 78 auf, welches in eine angepaßte Ausnehmung 80 als Verbindungselement des zweiten Teilschilttens 74 eintaucht. Über Verklemmung dieser beiden Verbindungselemente 78, 80 lassen sich die beiden Teilschlitten 72,74 miteinander fixieren.

Zum Antrieb des zweiten Schlittens 58 sind zwei Paare gegenüberliegender Motoren 82, 84 und 86, 88 vorgesehen. Die Motoren 82, 84 sind oberhalb der ersten Führungsbahn 64 angeordnet. Die Motoren 86, 88 sind unterhalb der zweiten Führungsbahn 66 angeordnet. Die Anordnung ist dabei vorzugsweise symmetrisch. Bei den Motoren 82, 84, 86, 88 handelt es sich beispielsweise um Linearmotoren. Die gegenüberliegenden Motoren 82, 86 bilden ein Unearmotoren-Paar. Ebenso bilden die gegenüberliegenden Motoren 84, 88 ein Linearmotoren-Paar.

Die Verschiebung des zweiten Schlittens 58 in der X-Richtung ist gesteuert. Die X-Achse bildet eine NC-Achse. Der zweite Schlitten 58 wird dabei als Ganzes bewegt, das heißt als Teilschlitten-Verbund.

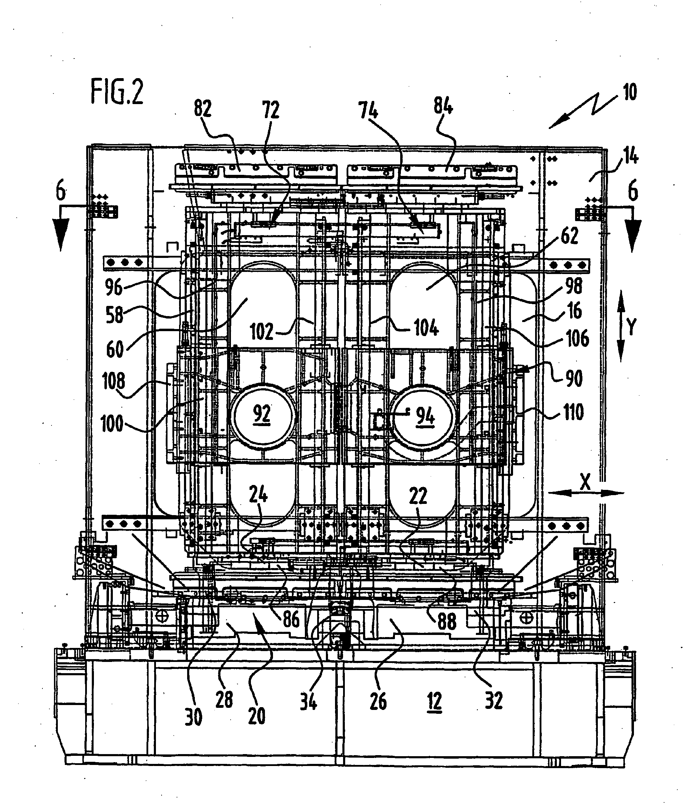

An dem zweiten Schlitten 58 ist ein dritter Schlitten 90 (Y-Schlitten) geführt. Dieser dritten Schlitten 90 hält Werkzeugspindeln. In dem gezeigten Ausführungsbeispiel hält der dritte Schlitten 90 zwei Werkzeugspindeln (Doppelspindler). Eine erste Werkzeugspindel (in Figur 2 ist eine Werkzeugspindel-Aufnahme 92 gezeigt) durchsetzt dabei die erste Mittelöffnung 60 und ist in dieser in der Richtung Y verschieblich. Eine zweite Werkzeugspindel in der Figur 2 ist eine entsprechende Werkzeugspindel-Aufnahme 94 gezeigt) durchsetzt die zweite Mittelöffnung 60 und ist wiederum in dieser In der Y-Richtung beweglich. Die beiden Werkzeugspindeln werden dabei gemeinsam mit dem dritten Schlitten 90 in der Y-Richtung bewegt und positioniert.

Der dritte Schlitten umfaßt einen ersten Teilschlitten 96 und einen zweiten Teilschlitten 98. Die relative Lage der beiden Teilschlitten 96, 98 ist in der Y-Richtung feststellbar einstellbar.

An dem zweiten Schlitten (X-Schlitten) 58 sind beabstandete Führungsbahnen 100, 102 um die erste Mittelöffnung 60 und beabstandete Führungsbahnen 104, 106 um die zweite Mittelöffnung 62 angeordnet. An diesen Führungsbahnen ist der dritte Schlitten 90 gehalten und geführt. In einem mittleren Bereich des dritten Schlittens 90 ist dieser in den ersten Teilschlitten 96 und den zweiten Teilschlitten 98 getrennt, wobei der erste Teilschlitten an der Führungsbahn 102 abgestützt ist und der zweite Teilschlitten an der Führungsbahn 104 abgestützt ist. Bei gelöster Fixierung läßt sich die relative Lage der beiden Teilschlitten 96, 98 in der Richtung Y einstellen. Eine typische Größenordnung der Einstellbarkeit liegt dabei im Millimeter-Bereich. Zur Fixierung der beiden Teilschlitten 96, 98 miteinander und insbesondere zur Ausbildung eines Teilschlitten-Verbunds zur Bildung des dritten Schlittens 90 ist beispielsweise eine Klemmeinrichtung vorgesehen, welche entsprechende Verbindungselemente der beiden Teilschlitten 96, 98 miteinander verbindet.

Die beiden Teilschlitten 96, 98 sind in der X-Y-Ebene relativ zueinander beweglich, so daß auch eine Einstellung der relativen Lage der Teilschlitten 72, 74 in der X-Richtung ermöglicht ist.

Zur Bewegung des dritten Schlittens 90 sind gegenüberliegende Motoren 108, 110 vorgesehen. Diese sind insbesondere symmetrisch bezüglich des Schlittens 90 angeordnet. Bei den Motoren handelt es sich insbesondere um Linearmotoren; die Motoren 108, 110 bilden dann ein Linearmotoren-Paar in symmetrischer Anordnung.

Die Bewegung des dritten Schlittens (Y-Schlitten) 90 in der Y-Richtung erfolgt gesteuert. Die Y-Achse zur Bewegung des dritten Schlittens 90 bildet eine einzige NC-Achse. Die Y-Achse steht senkrecht zur X-Achse und zur Z-Achse. Insbesondere handelt es sich bei der Y-Achse um eine vertikale Achse.

Bei der erfindungsgemäßen Lösung ist mindestens ein Schlitten in eine Mehrzahl von Teilschlitten getrennt. Bei dem beschriebenen Ausführungsbeispiel sind alle drei Schlitten 20, 58 und 90 in jeweilige Teilschlitten getrennt. Die Werkzeugmaschine verfügt über eine Anzahl von NC-Achsen entsprechend der Anzahl der Schlitten bzw. Schlittenbewegungsmöglichkeiten. Bei dem beschriebenen Ausführungsbeispiel sind drei NC-Achsen vorgesehen. Durch die Auftrennung des mindestens einen Schlittens in Teilschlitten ist eine feststellbare Einstellung der relativen Lage zwischen den Teilschlitten möglich. Dadurch kann beispielsweise eine Werkzeuglängenkorrektur durchgeführt werden:
Es besteht die grundsätzliche Möglichkeit, daß ein an der ersten Werkzeugspindel gehaltenes Werkzeug etwas länger ist als ein an der zweiten Werkzeugspindel gehaltenes Werkzeug. Die Ursache dafür kann unterschiedliche Abnutzung sein. Dieser Längenunterschied läßt sich dadurch korrigieren, daß die beiden Teilschlitten 26, 28 in der Z-Richtung entsprechend des Werkzeuglängenunterschiedes verfahren werden und dann die erreichte Stellung fixiert wird. Bei der Bearbeitung der Werkstücke ist dann der Werkzeuglängenunterschied automatisch berücksichtigt.

Gleiches gilt grundsätzlich auch für die Einstellung der relativen Lage der Teilschlitten für den zweiten Schlitten 58 und den dritten Schlitten 90.

Der Hub von Teilschlitten relativ zueinander liegt in dem Größenordnungsbereich Millimeter. Beispielsweise liegt ein Hubbereich für die relative Lage der Teilschlitten 72, 74 in der X-Richtung im Bereich von 0,2 mm und der Teilschlitten 96, 98 in der Y-Richtung im Bereich von 0,2 mm. Der Bereich für die Hubbewegung der Schlitten 58, 90 ist sehr viel größer. Beispielswelse liegt er im Bereich von ca. 700 mm.

Durch eine Auftrennung eines Schlittens in Teilsch litten, wobei die Teilschlitten in ihrer relativen Lage feststellbar einstellbar sind, Ist auch die Montage vereinfacht. Insbesondere ist die Ausrichtung von Werkzeugspindel gegenüber Werkstückhaltern vereinfacht.

Weiterhin läßt sich auch nach der Montage noch eine Korrektur an der Werkzeugmaschine durchführen. Durch relative Verschiebung von Teilschlitten in einem Schlitten läßt sich eine genaue Justage erreichen.

Die Teilschlitten in einem Schlitten weisen grundsätzlich getrennte Bewegungsachsen auf. Durch die Fixierung der Teilschlitten sind die Bewegungsachse aber "geklemmt", das heißt es ergibt sich für den Teilschlitten-Verbund eine einzige Bewegungsachse und damit eine einzige (synchronisierte) NC-Achse. Es ist dann auch nur ein einziges NC-Programm für die Steuerung der Bewegung notwendig.

Bei der Werkstückbearbeitung sind die Teilschlitten zu einem Schlitten miteinander fixiert. Die Verschiebung der Teilschlitten in einem Schlitten erfolgt nur während der Montage oder Justage der erfindungsgemäßen Werkzeugmaschine.

## Patentansprüche

1. Werkzeugmaschine mit mindestens einem beweglichen Schlitten (20; 58; 90), welcher eine Mehrzahl von Haltern (22, 24; 92, 94) für Werkzeuge und/oder Werkstücke aufweist, wobei der mindestens eine Schlitten (20; 58; 90) eine Mehrzahl von getrennten Teilschlitten (26; 28; 72, 74; 96, 98) aufweist, an jedem Teilschlitten (26; 28; 72; 74; 96; 98) mindestens ein Halter (22; 24; 92; 94) angeordnet ist, die relative Lage der Teilschlitten (26, 28; 72, 74; 96, 98) zueinander feststellbar einstellbar ist und benachbarte Teilschlitten (26, 28; 72, 74; 96, 98) über eine Feststelleinrichtung (46; 76) miteinander fixierbar sind, wobei der mindestens eine Schlitten (20; 58; 90) auf Führungsbahnen (30, 32, 34; 64, 66; 100, 102, 104, 106) geführt ist, wobei beabstandete äußere Führungsbahnen (30, 32; 64, 66; 100, 106) vorgesehen sind, **dadurch gekennzeichnet , daß** die relative Lage der Teilschlitten (26, 28; 72, 74; 96, 98) in einer Richtung im wesentlichen parallel zur Bewegungsrichtung (Z; X; Y) des Schlittens (20; 58; 90) einstellbar ist und daß mindestens eine zusätzliche Führungsbahn (34; 102; 104) vorgesehen ist, um den mindestens einen Schlitten (20; 90) an oder in der Nähe eines Verbindungsbereichs zwischen den Teilschlitten (26, 28; 96, 98) zu stützen.

2. Werkzeugmaschine nach Anspruch 1, **dadurch gekennzeichnet, daß** die Bewegung des mindestens einen Schlittens (20; 58; 90) bei der Werkstückbearbeitung als Teilschlitten-Verbund erfolgt.

3. Werkzeugmaschine nach einem der vorangehenden Ansprüche, **dadurch gekennzeichnet, daß** pro Teilschlitten (26; 28; 72; 74; 96; 98) genau ein Halter (22; 24; 92; 94) angeordnet ist.

4. Werkzeugmaschine nach einem der vorangehenden Ansprüche, **dadurch gekennzeichnet, daß** die relative Lage benachbarter Teilschlitten (26, 28; 72, 74; 96, 98) einstellbar ist.

5. Werkzeugmaschine nach einem der vorangehenden Ansprüche, **dadurch gekennzeichnet, daß** bei benachbarten Teilschlitten ein erster Teilschlitten (26) Verbindungselemente (36) und ein zweiter Teilschlitten (28) angepaßte Verbindungselemente (38) aufweist, welcher miteinander fixierbar sind.

6. Werkzeugmaschine nach einem der vorangehenden Ansprüche, **dadurch gekennzeichnet, daß** ein Antrieb (54, 56; 82, 84, 86, 88; 108, 110) für den mindestens einen Schlitten (20; 58; 90) vorgesehen ist.

7. Werkzeugmaschine nach einem der vorangehenden Ansprüche, **dadurch gekennzeichnet, daß** der mindestens eine Schlitten (58; 90) eine Mehrzahl von Werkzeugspindeln hält.

8. Werkzeugmaschine nach einem der vorangehenden Ansprüche, **dadurch gekennzeichnet, daß** der mindestens eine Schlitten (20) eine Mehrzahl von Werkstückhaltern (22, 24) aufweist.

9. Werkzeugmaschine nach einem der vorangehenden Ansprüche, **dadurch gekennzeichnet, daß** eine Mehrzahl von Schlitten (20, 58, 90) vorgesehen ist, wobei die Schlitten (20, 58, 90) in unterschiedlichen Richtungen (X; Y; Z) beweglich- sind.

10. Werkzeugmaschine nach Anspruch 9 **dadurch gekennzeichnet, daß** ein erster Schlitten (20) vorgesehen ist, welcher in einer ersten Richtung (Z) beweglich ist.

11. Werkzeugmaschine nach Anspruch 10, **dadurch gekennzeichnet, daß** zum Antrieb des ersten Schlittens (20) zwei beabstandete Motoren (54, 56) vorgesehen sind.

12. Werkzeugmaschine nach einem der Ansprüche 9 bis 11, **dadurch gekennzeichnet, daß** ein zweiter Schlitten (58) vorgesehen ist, welcher in einer zweiten Richtung (X) beweglich ist.

13. Werkzeugmaschine nach Anspruch 12, **dadurch gekennzeichnet, daß** zum Antrieb des zweiten Schlittens (58) zwei Motorenpaare (82, 84, 86, 88) vorgesehen sind.

14. Werkzeugmaschine nach einem der Ansprüche 9 bis 13, **dadurch gekennzeichnet, daß** ein dritter Schlitten (90) vorgesehen ist, welcher in einer dritten Richtung (Y) beweglich ist.

15. Werkzeugmaschine nach Anspruch 14, **dadurch gekennzeichnet, daß** zum Antrieb des dritten Schlittens (90) zwei beabstandete Motoren (108, 110) vorgesehen sind.

16. Werkzeugmaschine nach Anspruch 14 oder 15, **dadurch gekennzeichnet, daß** der dritte Schlitten (90) durch den zweiten Schlitten (58) gehalten ist.

17. Werkzeugmaschine nach einem der Ansprüche 9 bis 16, **dadurch gekennzeichnet, daß** ein erster Schlitten einen zweiten Schlitten und der zweite Schlitten einen dritten Schlitten hält.

18. Werkzeugmaschine nach Anspruch 17, **dadurch gekennzeichnet, daß** mittels eines Schlittenverbunds aus dem ersten Schlitten, dem zweiten Schlitten und dem dritten Schlitten mindestes ein Werkzeug und/oder Werkstück in allen drei Raumrichtungen beweglich ist.

19. Werkzeugmaschine nach einem der Ansprüche 9 bis 18, **dadurch gekennzeichnet, daß** die Schlitten (20, 58, 90) in allen Bewegungsachsen (X, Y, Z) der Werkzeugmaschine entkoppelt sind.

## Claims

1. Machine tool with at least one movable slide (20; 58; 90) having a plurality of holders (22, 24; 92, 94) for tools and/or workpieces, wherein the at least one slide (20; 58; 90) has a plurality of separate subslides (26; 28; 72, 74; 96, 98), at least one holder (22; 24; 92; 94) is arranged on each subslide (26; 28; 72; 74; 96; 98), the relative position of the subslides (26, 28; 72, 74; 96, 98) in relation to one another is adjustable in a securable manner and adjacent subslides (26, 28; 72, 74; 96, 98) are fixable to one another via a securing device (46; 76), wherein the at least one slide (20; 58; 90) is guided on guide paths (30, 32, 34; 64, 66; 100, 102, 104, 106), wherein spaced, outer guide paths (30, 32; 64, 66; 100, 106) are provided, **characterized in that** the relative position of the subslides (26, 28; 72, 74; 96, 98) is adjustable in a direction essentially parallel to the direction of movement (Z; X; Y) of the slide (20; 58; 90) and that at least one additional guide path (34; 102; 104) is provided in order to support the at least one slide (20; 90) at or in the vicinity of a connecting area between the subslides (26, 28; 96, 98).

2. Machine tool as defined in claim 1, **characterized in that** the at least one slide (20; 58; 90) moves as a subslide assembly during the workpiece machining.

3. Machine tool as defined in either one of the preceding claims, **characterized in that** exactly one holder (22; 24; 92; 94) is arranged per subslide (26; 28; 72; 74; 96; 98).

4. Machine tool as defined in any one of the preceding claims, **characterized in that** the relative position of adjacent subslides (26, 28; 72, 74; 96, 98) is adjustable.

5. Machine tool as defined in any one of the preceding claims, **characterized in that** in the case of adjacent subslides a first subslide (26) has connecting elements (36) and a second subslide (28) adapted connecting elements (38), said connecting elements being fixable to one another.

6. Machine tool as defined in any one of the preceding claims, **characterized in that** a drive (54, 56; 82, 84, 86, 88; 108, 110) for the at least one slide (20; 58; 90) is provided.

7. Machine tool as defined in any one of the preceding claims, **characterized in that** the at least one slide (58; 90) supports a plurality of tool spindles.

8. Machine tool as defined in any one of the preceding claims, **characterized in that** the at least one slide (20) has a plurality of workpiece supports (22, 24).

9. Machine tool as defined in any one of the preceding claims, **characterized in that** a plurality of slides (20, 58, 90) is provided, wherein the slides (20, 58, 90) are movable in different directions (X; Y; Z).

10. Machine tool as defined in claim 9, **characterized in that** a first slide (20) is provided, said slide being movable in a first direction (Z).

11. Machine tool as defined in claim 10, **characterized in that** two spaced motors (54, 56) are provided for driving the first slide (20).

12. Machine tool as defined in any one of claims 9 to 11, **characterized in that** a second slide (58) is provided, said slide being movable in a second direction (X).

13. Machine tool as defined in claim 12, **characterized in that** two pairs of motors (82, 84, 86, 88) are provided for driving the second slide (58).

14. Machine tool as defined in any one of claims 9 to 13, **characterized in that** a third slide (90) is provided, said slide being movable in a third direction (Y).

15. Machine tool as defined in claim 14, **characterized in that** two spaced motors (108, 110) are provided for driving the third slide (90).

16. Machine tool as defined in claim 14 or 15, **characterized in that** the third slide (90) is supported by the second slide (58).

17. Machine tool as defined in any one of claims 9 to 16, **characterized in that** a first slide supports a second slide and the second slide supports a third slide.

18. Machine tool as defined in claim 17, **characterized in that** at least one tool and/or workpiece is movable in all three spatial directions by means of a slide assembly consisting of the first slide, the second slide and the third slide.

19. Machine tool as defined in any one of claims 9 to 18, **characterized in that** the slides (20, 58, 90) are disconnected in all the axes of movement (X, Y, Z) of the machine tool.

## Revendications

1. Machine-outil comportant au moins un chariot (20 ; 58 ; 90) mobile, qui comporte une pluralité de supports (22, 24 ; 92, 94) pour outils et/ou pièces, ledit au moins un chariot (20 ; 58 ; 90) comportant une pluralité de chariots partiels (26, 28 ; 72, 74 ; 96, 98) séparés, au moins un support (22 ; 24 ; 92 ; 94) étant disposé sur chaque chariot partiel (26 ; 28 ; 72 ; 74 ; 96 ; 98), la position relative des chariots partiels (26, 28 ; 72, 74 ; 96, 98) les uns par rapport aux autres pouvant être réglée de manière fixe et des chariots partiels (26, 28 ; 72, 74 ; 96, 98) adjacents pouvant être fixés entre eux par l'intermédiaire d'un dispositif d'immobilisation (46 ; 76), sachant que ledit au moins un chariot (20 ; 58 ; 90) est guidé sur des voies de guidage (30, 32, 34 ; 64, 66 ; 100, 102, 104, 106), sachant qu'il est prévu des voies de guidage extérieures (30, 32 ; 64, 66 ; 100, 106) écartées l'une de l'autre, **caractérisée en ce que** la position relative des chariots partiels (26, 28 ; 72, 74 ; 96, 98) peut être réglée dans une direction sensiblement parallèle à la direction de déplacement (Z ; X ; Y) du chariot (20 ; 58 ; 90), et **en ce qu'**il est prévu au moins une voie de guidage (34 ; 102 ; 104) supplémentaire pour appuyer ledit au moins un chariot (20 ; 90) sur ou à proximité d'une zone d'assemblage entre les chariots partiels (26, 28 ; 96, 98).

2. Machine-outil selon la revendication 1, **caractérisée en ce que** le mouvement dudit au moins un chariot (20 ; 58 ; 90) pendant l'usinage de la pièce s'effectue sous la forme d'un ensemble de chariots partiels.

3. Machine-outil selon l'une quelconque des revendications précédentes, **caractérisée en ce que** pour chaque chariot partiel (26 ; 28 ; 72 ; 74 ; 96 ; 98) est monté exactement un support (22 ; 24 ; 92 ; 94).

4. Machine-outil selon l'une quelconque des revendications précédentes, **caractérisée en ce que** la position relative de chariots partiels (26 ; 28 ; 72 ; 74 ; 96 ; 98) adjacents peut être réglée.

5. Machine-outil selon l'une quelconque des revendications précédentes, **caractérisée en ce que**, en présence de chariots partiels adjacents, un premier chariot partiel (26) comporte des éléments d'assemblage (36) et un deuxième chariot partiel (28) comporte des éléments d'assemblage (38) adaptés, lesquels peuvent être fixés entre eux.

6. Machine-outil selon l'une quelconque des revendications précédentes, **caractérisée en ce qu'**il est prévu un système d'entraînement (54, 56 ; 82, 84, 86, 88 ; 108, 110) pour ledit au moins un chariot (20 ; 58 ; 90).

7. Machine-outil selon l'une quelconque des revendications précédentes, **caractérisée en ce que** ledit au moins un chariot (58 ; 90) porte une pluralité de broches porte-outil.

8. Machine-outil selon l'une quelconque des revendications précédentes, **caractérisée en ce que** ledit au moins un chariot (20) comporte une pluralité de porte-pièces (22, 24).

9. Machine-outil selon l'une quelconque des revendications précédentes, **caractérisée en ce qu'**il est prévu une pluralité de chariots (20 ; 58 ; 90), lesdits chariots (20 ; 58 ; 90) étant mobiles dans des directions différentes (X ; Y ; Z).

10. Machine-outil selon la revendication 9, **caractérisée en ce qu'**il est prévu un premier chariot (20) qui est mobile dans une première direction (Z).

11. Machine-outil selon la revendication 10, **caractérisée en ce que** deux moteurs (54, 56) situés à distance l'un de l'autre sont prévus pour l'entraînement du premier chariot (20).

12. Machine-outil selon l'une quelconque des revendications 9 à 11, **caractérisée en ce qu'**il est prévu un deuxième chariot (58) qui est mobile dans une deuxième direction (X).

13. Machine-outil selon la revendication 12, **caractérisée en ce que** deux paires de moteurs (82, 84, 86, 88) sont prévus pour l'entraînement du deuxième chariot (58).

14. Machine-outil selon l'une quelconque des revendications 9 à 13, **caractérisée en ce qu'**il est prévu un troisième chariot (90) qui est mobile dans une troisième direction (Y).

15. Machine-outil selon la revendication 14, **caractérisée en ce que** deux moteurs (108, 110) situés à distance l'un de l'autre sont prévus pour l'entraînement du troisième chariot (90).

16. Machine-outil selon la revendication 14 ou 15, **caractérisée en ce que** le troisième chariot (90) est maintenu par le deuxième chariot (58).

17. Machine-outil selon l'une quelconque des revendications 9 à 16, **caractérisée en ce qu'**un premier chariot maintient un deuxième chariot et le deuxième chariot maintient un troisième chariot.

18. Machine-outil selon la revendication 17, **caractérisée en ce qu'**au moins un outil et/ou une pièce sont mobiles dans les trois directions dans l'espace au moyen d'un ensemble de chariots formé par le premier chariot, le deuxième chariot et le troisième chariot.

19. Machine-outil selon l'une quelconque des revendications 9 à 18, **caractérisée en ce que** les chariots (20, 58, 90) sont découplés dans tous les axes de déplacement (X, Y, Z) de la machine-outil.
